# EUROPEAN PATENT SPECIFICATION

(11) **EP 4 170 469 B1**
(45) Date of publication and mention of the grant of the patent: **25.03.2026**
(21) Application number: 21826476.0
(22) Date of filing: 16.06.2021
(51) Int. Cl.: G06F 3/041, G06F 3/0484

(54) **INTERFACE DISPLAY METHOD AND APPARATUS, AND ELECTRONIC DEVICE**
SCHNITTSTELLENANZEIGEVERFAHREN UND -VORRICHTUNG SOWIE ELEKTRONISCHE VORRICHTUNG
PROCÉDÉ ET APPAREIL D'AFFICHAGE D'INTERFACE, ET DISPOSITIF ÉLECTRONIQUE

(30) Priority: 19.06.2020 CN 202010564774
(43) Date of publication of application: 26.04.2023
(73) Proprietor: Vivo Mobile Communication Co., Ltd., Dongguan, Guangdong 523863 (CN)
(72) Inventor: CHEN, Dongxing, Dongguan, Guangdong 523863 (CN)
(74) Representative: Raffay & Fleck
(86) International application number: PCT/CN2021/100313
(87) International publication number: WO 2021/254378

(56) References cited:
- WO-A1-2019/232761
- CN-A- 104 679 881
- CN-A- 104 700 032
- CN-A- 105 404 517
- CN-A- 111 031 093
- CN-A- 111 880 675
- US-A1- 2011 161 371

## Description

### CROSS-REFERENCE TO RELATED APPLICATIONS

### TECHNICAL FIELD

Embodiments of the present invention relate to the field of communication technologies, and in particular, to an interface display method and apparatus, and an electronic device.

### BACKGROUND

With the development of electronic device technology, users use electronic devices (for example, smartphones) more and more frequently, and in an increasing number of scenarios, electronic devices need to frequently switch between a plurality of interfaces of a same application.

In the related art, in a case that a first interface is displayed on an electronic device, the user wants the first interface and a second interface to be displayed at the same time in a same application on the electronic device. If an operation transaction (for example, a payment transaction) on the first interface is the same as an operation transaction on the second interface, when needing to perform the operation transaction, the user needs to select one display interface, so that the electronic device displays the display interface and implements the operation transaction.

In this way, when the user operates the same operation transaction on different display interfaces, the user is prone to misoperations, which degrades data security. Prior art document WO2019/232761A1 relates to a terminal with a touchscreen fingerprint reader that enables different operations depending on the user's gesture, such as a tap, long press, or swipe, on a displayed fingerprint icon. Each gesture can trigger the display of a different interface, for example, opening a specific application, function, or shortcut menu, once the fingerprint verification succeeds. The fingerprint icon may be shown or hidden, remain fixed, move across home screens, or overlap with application icons depending on layout or user settings.

### SUMMARY

Embodiments of the present invention provide an interface display method and apparatus, and an electronic device, so as to resolve a problem of proneness to misoperations by a user to greatly reduce security of user data when the user synchronously performs a same operation transaction on different display interfaces in a same application.

To resolve the foregoing technical problem, the present invention is implemented as follows:

According to a first aspect, an embodiment of the present invention provides an interface display method according to claim 1.

According to a second aspect, an embodiment of the present invention provides an interface display apparatus according to claim 10.

According to a third aspect, an embodiment of the present invention provides an electronic device according to claim 14.

According to a fourth aspect, an embodiment of the present invention provides a readable storage medium according to claim 15.

According to a fifth aspect, a non-claimed embodiment of this application provides a chip. The chip includes a processor and a communications interface. The communications interface is coupled to the processor, and the processor is configured to run a program or instructions to implement the interface display method according to the first aspect.

In the embodiments of the present invention, in a case that an interface function corresponding to the second interface of the first application is run in the electronic device, the electronic device displays the first interface of the first application and the first sign. The first sign may be used to indicate the second interface, and the first interface and the second interface each include a non-repeatable-read target operation transaction. Subsequently, the electronic device may receive the first input by the user on the first sign, and therefore displays the second interface on a display, where the target operation transaction included in at least one of the first interface and the second interface is in a locked state. In this way, when the electronic device stores different display interfaces including a same target operation transaction in a same application, target operation transactions on some or all of the display interfaces may be locked to facilitate operations by the user on different display interfaces in the same application and help the user avoid misoperation, thereby ensuring security of user data in the electronic device and improving security of using the electronic device by the user.

### BRIEF DESCRIPTION OF THE DRAWINGS

FIG. 1 is a schematic diagram of a possible architecture of an Android operating system according to an embodiment of the present invention;
FIG. 2 is a first schematic diagram of an interface to which an interface display method is applied according to an embodiment of the present invention;
FIG. 3 is a schematic flowchart of an interface display method according to an embodiment of the present invention;
FIG. 4 is a second schematic diagram of an interface to which an interface display method is applied according to an embodiment of the present invention;
FIG. 5 is a third schematic diagram of an interface to which an interface display method is applied according to an embodiment of the present invention;
FIG. 6 is a fourth schematic diagram of an interface to which an interface display method is applied according to an embodiment of the present invention;
FIG. 7 is a fifth schematic diagram of an interface to which an interface display method is applied according to an embodiment of the present invention;
FIG. 8 is a sixth schematic diagram of an interface to which an interface display method is applied according to an embodiment of the present invention;
FIG. 9 is a first schematic structural diagram of an electronic device according to an embodiment of the present invention; and
FIG. 10 is a second schematic structural diagram of an electronic device according to an embodiment of the present invention.

### DETAILED DESCRIPTION OF THE EMBODIMENTS

The technical solutions in the embodiments of the present invention will be clearly and completely described below with reference to the accompanying drawings in the embodiments of the present invention. Apparently, the embodiments described are some rather than all of the embodiments of the present invention. All other embodiments derived by persons of ordinary skill in the art based on the embodiments of the present invention without any inventive effort shall fall within the scope of protection of the present invention.

Terms in the present invention are interpreted below:

### 1. Operation transaction

Operation transaction is also referred to as transaction. As a single execution unit (Unit) in a database, a transaction consists of data manipulation language (data manipulation language, DML) statements of the same kind. The DML in the unit exists as an entirety: either all of the statements are successfully performed, or none of them is successfully performed.

Using online shopping as an example, its corresponding operation transaction is a trade operation transaction, and the trade operation transaction refers to a complete trade process. Specifically, a trade process includes the following steps: (1) updating inventory information of a product purchased by a customer; (2) storing payment information of the customer; (3) generating an order and storing the order in the database; and (4) updating user-related information, such as the number of purchases.

In normal cases, all these trade operations can be smoothly executed to implement the trade successfully, and all database information associated with the trade is also successfully updated, that is, the trade operation transaction is completed. However, if a power outage or another unexpected situation leads to an error (for example, an abnormality in updating the inventory information of the product, or insufficient money in customer's bank account) at any step of this trade process, the entire trade process may fail, that is, the trade operation transaction is not completed. Once the trade fails, all the information in the database has to be kept in a same state as that before trade. For example, if the trade fails due to a failure at the last step of updating user information, it needs to be ensured that this failed trade does not affect a state of the database. To be specific, the original inventory information has not been updated, the user has not made a payment, and an order has not been generated; otherwise, information in the database may become inconsistent or even more severe and unpredictable consequences may occur.

Transaction needs to satisfy four properties, namely, atomicity (atomicity), consistency (consistency), isolation (isolation), and durability (durability), which are referred to as four ACID properties.

Isolation is also referred to as "independence". In a case that two or more transactions are executed concurrently to ensure data security, operations within a transaction are isolated from an operation of another transaction, not visible to another transaction being executed, so that execution of the transactions does not interfere with each other. In other words, concurrently executed transactions cannot know an intermediate state of one another, so that the concurrently executed transactions do not affect each other. For example, for T1 in any pair of transactions T1 and T2, T2 either has been completed before T1 starts, or is executed only after T1 has been completed.

### 2. Non-repeatable-read

Non-repeatable-read is designed for a process in which the electronic device performs database access, where two identical queries within one transaction return different data, and such different data may cause data in a background database to be updated or modified incorrectly. It can be understood that a non-repeatable-read operation transaction in the embodiments of the present invention is an operation transaction for which a repeated operation is not suitable (for example, a payment operation transaction on a shopping cart checkout page).

For example, if the transaction T1 reads a piece of data and then the transaction T2 reads and modifies the data, T1 obtains a different result when T1 reads the data again to verify a read value.

A more comprehensible explanation is that: same data is read a plurality of times within one transaction. While the transaction has not yet completed, another transaction also accesses the same data and modifies it. Then, during two times of data reading in the first transaction, due to the modification by the another transaction, data read twice by the first transaction may be different, that is, data read twice within one transaction is different. In this way, the data is non-repeatable-read, that is, original read is non-repeatable.

In an example, there are currently 10 employees with a salary of 1000 in a company. (1) Transaction 1: read all employees with a salary of 1000; (2) transaction 2: insert an employee entry with a salary of 1000 into the table; (3) the transaction 1 reads all employees with a salary of 1000 to obtain 11 entries. A solution to this situation is that: No new data can be added by any other transactions before data processing for the operation transaction has been completed.

### 3. Transaction interface

A transaction interface is a display interface that includes operational transaction in an electronic device.

### 4. interface terms in application

The electronic device has configured several interface levels in an application, and the electronic device sequentially displays display interfaces of such levels based on an input of a user. After receiving an input by the user on an application icon, the electronic device opens by default a home page, usually a main page of the application. A display interface that is finally displayed after the electronic device receives the input of the user is an end interface, and a display interface between the home interface and the end interface to be opened by the electronic device is an intermediate interface. It can be understood that the end interface may be the same as the home interface, and there may be no intermediate interface between the end interface and the home interface.

The electronic device receiving inputs by the user displays the home interface, the intermediate interface, and then the end interface, which form an interface path. The number of switching interactions with the electronic device to display from the home interface to the end interface is referred to as a path depth.

In an example, the user wants to open a picture 1 in a dialog box with a user A in a chat application (Application, APP). When the user taps on the chat APP, the electronic device directly displays a home page including a chat list on the display, where the home page is a home interface. Then, the user finds the dialog box with the user A on the home page and performs a tap input on the dialog box, so that a dialog interface is displayed on the display, where the dialog interface is an intermediate interface. Then, the user performs a slide input on the dialog interface to find a thumbnail of the picture 1, and taps on the thumbnail, so that the picture 1 is displayed on the display, where a display interface of the picture 1 is an end interface. In the foregoing process in which the user opens the picture 1, an interface path is: home interface-dialogue interface-picture 1 display interface, where the user interacts with the electronic device twice from the home interface to the end interface, that is, the path depth is 2.

### 5. Other terms

It should be noted that "/" in this specification represents "or". For example, A/B may indicate A or B. The term "and/or" in this specification is only an association relationship for describing associated objects, indicating that three relationships may be present. For example, A and/or B may indicate three cases: presence of only A; presence of both A and B; and presence of only B.

It should be noted that "a plurality of" in this specification refers to two or more.

It should be noted that, in the embodiments of the present invention, terms such as "an example" or "for example" are used to indicate an example, an illustration, or a description. Any embodiment or design described by "an example" or "for example" in the embodiments of the present invention should not be construed as being more preferred or advantageous than other embodiments or designs. To be precise, the use of the terms such as "an example" or "for example" is intended to present a related concept in a specific manner.

It should be noted that, to clearly describe the technical solutions in the embodiments of the present invention, in the embodiments of the present invention, the terms such as "first" and "second" are used to distinguish between same or similar items with a basically same function or effect. A person skilled in the art can understand that the terms such as "first" and "second" do not limit a quantity and an execution order. For example, a first input and a second input are intended to distinguish between different inputs, instead of describing a particular order of the inputs.

An interface display method provided in the embodiments of the present invention may be executed by an electronic device, or a functional module and/or a functional entity capable of implementing the interface display method in the electronic device. Specifically, this may be determined according to an actual use requirement, and is not limited in the embodiments of the present invention.

The electronic device described in the embodiments of the present invention may be a terminal device. For example, the terminal device may be a mobile terminal device or a non-mobile terminal device. The mobile terminal device may be a mobile phone, a tablet computer, a laptop computer, a palmtop computer, an in-vehicle terminal device, a wearable device, an ultra-mobile personal computer (ultra-mobile personal computer, UMPC), a netbook, a personal digital assistant (personal digital assistant, PDA), or the like. The non-mobile terminal device may be a personal computer (personal computer, PC), a television (television, TV), an automated teller machine or a self-service machine, or the like. This is not specifically limited in the embodiments of the present invention.

The electronic device in the embodiments of the present invention may be an electronic device with an operating system. The operating system may be an Android (Android) operating system, an iOS operating system, or another possible operating system. This is not specifically limited in the embodiments of the present invention.

The following uses the Android operating system as an example to describe a software environment to which the interface display method provided in the embodiments of the present invention is applied.

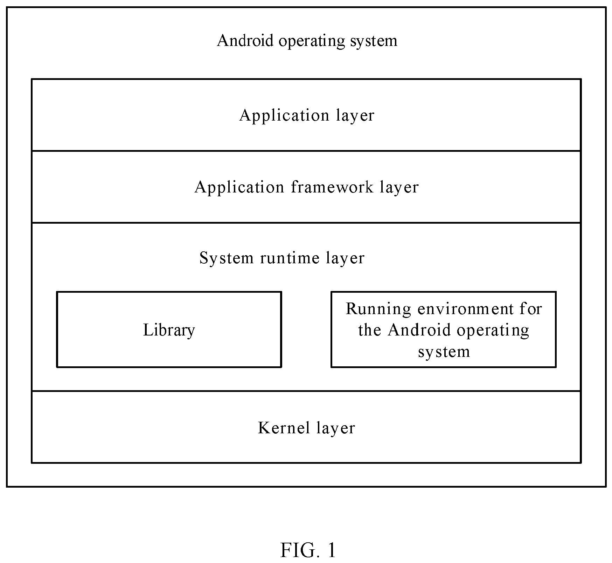

FIG. 1 is a schematic diagram of a possible architecture of an Android operating system according to an embodiment of the present invention. In FIG. 1, the architecture of the Android operating system includes four layers: an application layer, an application framework layer, a system runtime layer, and a kernel layer (which may be specifically a Linux kernel layer).

The application layer includes various applications (including a system application and a third-party application) in the Android operating system.

The application framework layer is an application framework, and a developer may develop some applications based on the application framework layer while conforming to a rule for developing the application framework.

The system runtime layer includes a library (also referred to as a system library) and a running environment for the Android operating system. The library mainly provides the Android operating system with various resources required by the Android operating system. The operating environment for the Android operating system is used to provide the Android operating system with a software environment.

The kernel layer is an operating system layer of the Android operating system, and is the lowest layer in software levels of the Android operating system. The kernel layer provides, based on the Linux kernel, the Android operating system with a core system service and a hardware-related driver.

The Android operating system is used as an example. In the embodiments of the present invention, a developer may develop, based on the system architecture of the Android operating system shown in FIG. 1, a software program to implement the interface display method provided in the embodiments of the present invention, so that the interface display method can be run based on the Android operating system shown in FIG. 1. In other words, a processor or a terminal device may run the software program in the Android operating system to implement the interface display method provided in the embodiments of the present invention.

The interface display method provided by the embodiments of the present invention can be applied to a scenario in which a user simultaneously uses different display interfaces including a target operation transaction in a same application.

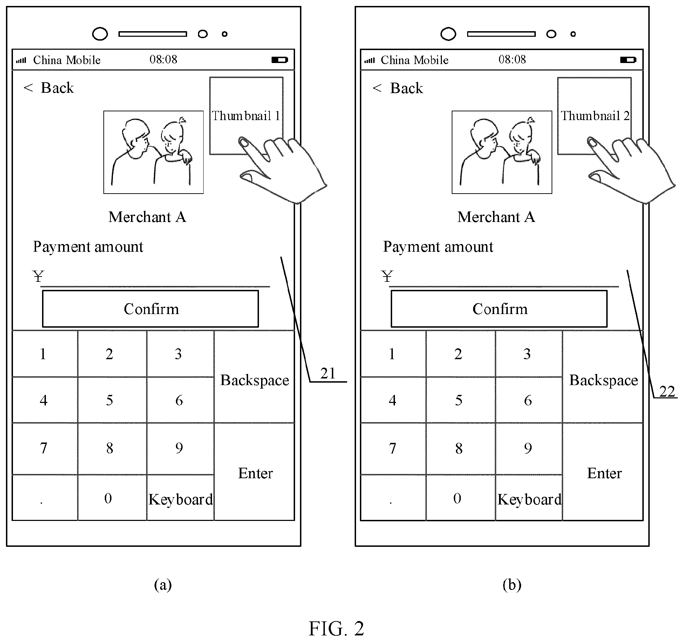

A scenario in which the user simultaneously uses different display interfaces including a target operation transaction in a same application is used as an example. As shown in (a) of FIG. 2, it is assumed that when the user purchases an item 1 using a shopping application on an electronic device, the user enters a store 1 from the home page, selects the item, and then enters a payment page 21. However, before making payment, the user needs to check information of the item 1 again. In this case, the user may tap on an interface thumbnail 1 of a detail page of the item 1 to switch a display interface to the detail page of the item 1, and switch the payment page 21 to an interface thumbnail 2. As shown in (b) of FIG. 2, if the user enters a payment interface, which is a payment page 22, of the item 1 again through the detail page, after the user purchases and pays for the item 1, the user taps on the interface thumbnail 2 again to switch the display interface to the payment page 21. Because the user is allowed to perform an operation on the payment page 21, the user may possibly repeat the same payment operation. In other words, due to a data error of the application, payment is made twice for only one item 1, thereby causing a financial loss to the user.

In the embodiments of the present invention, the electronic device may display a first sign on the payment page 22 on the display, where the first sign is used to indicate the payment page 21. After receiving a tap input by the user on the first sign, the electronic device may update the payment page 22 to the payment page 21, and the payment page 21 is in a locked state at this time. This enables the user to retrieve and view the payment page 21 and the payment page 22 at any time, and further ensures data security and property safety for the user.

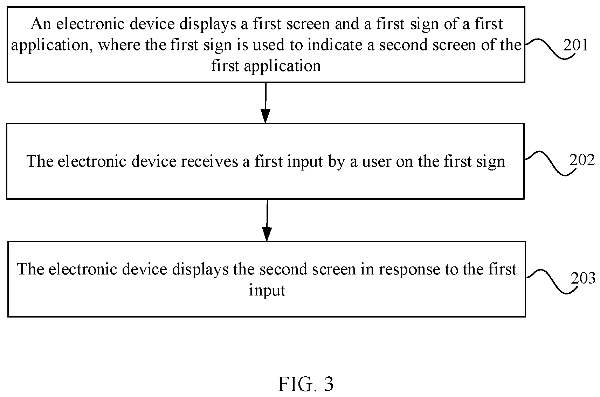

As shown in FIG. 3, an embodiment of the present invention provides an interface display method. The method includes steps 201 to 203.

Step 201: An electronic device displays a first interface of a first application and a first sign.

In this embodiment of the present invention, the first sign is used to indicate a second interface of the first application, and the first interface and the second interface each include a non-repeatable-read target operation transaction.

For example, the first sign includes at least one of an icon sign, the second interface, or a control. The icon sign may be an interface thumbnail of the second interface, an application icon of the first application, or a text sign (for example, the name of the first application).

For example, when the second interface is a plurality of display interfaces, the first sign may be one first sign or a plurality of first signs. The plurality of first signs are in one-to-one correspondence to the plurality of display interfaces of the second interface.

In this embodiment of the present invention, the application may be an application program.

In this embodiment of the present invention, the first application may be any one of the applications including an operation transaction on the electronic device.

In this embodiment of the present invention, a display position of the first sign may be moved to any position on the first interface along with a moving input by the user on the first sign. This is not limited in this embodiment of the present invention.

In this embodiment of the present invention, the first application is an application that can run an interface function corresponding to an interface of the operation transaction.

In this embodiment of the present invention, the operation transaction is an operation transaction that enables data transmission in an application to be performed between the current device and other devices (such as a server), where the data transmission is a single valid operation. For example, an operation such as deleting, modifying, sending, or acknowledging data in the application may be considered as an operation transaction, for example, an operation of sending an email in a mail APP, or an operation of making payment in a shopping APP.

In this embodiment of the present invention, the operation transaction may be preset by the electronic device or user-defined, which is not limited in this embodiment of the present invention.

It should be noted that in a process of setting the target operation transaction by the user, the electronic device limits permissions of the target operation transaction at a bottom layer of the data, that is, the electronic device specifies some transactions in the application as the target operation transaction. During setting of the target operation transaction, if the user wants to set the target operation transaction as a non-target operation transaction, the electronic device may not accept any setting by the user.

In an example, the payment transaction needs to be a target operation transaction to ensure security of property data of the user, but a transaction of sending an email may be set as a non-target operation transaction or a target operation transaction depending on requirements of the user.

In this embodiment of the present invention, the target operation transactions included in the first interface and the second interface are a same operation transaction, for example, an operation transaction for a same object. In an example, when the first application is a shopping APP, the target operation transaction in each of the first interface and the second interface may be a payment operation for an item 1.

In this embodiment of the present invention, the first interface and the second interface may be display interfaces including the target operation transaction in the first application.

In this embodiment of the present invention, the second interface may be one or more display interfaces in the first application, which is not limited in this embodiment of the present invention.

Further, when the second interface is used to indicate a plurality of display interfaces in the first application, one or more of the plurality of display interfaces include the target operation transaction.

In this embodiment of the present invention, displayed content in the second interface may constantly and dynamically change over time. For example, when the second interface is a conversation interface in a chat APP on the electronic device, the electronic device may update the conversation interface when the electronic device receives a new message.

Step 202: The electronic device receives a first input by the user on the first sign.

In this embodiment of the present invention, the first input may be a tap input, a swipe input, an input by a special gesture, or a voice input, which is not limited in this embodiment of the present invention.

Step 203: The electronic device displays the second interface in response to the first input.

In this embodiment of the present invention, the target operation transaction included in at least one of the first interface and the second interface is in a locked state.

In this embodiment of the present invention, that the target operation transaction included in at least one of the first interface and the second interface is in a locked state means that: the target operation transaction is in a readable state. To be specific, the user can merely browse or view displayed content in the first interface and/or the second interface, but cannot perform an operation on the target operation transaction in the first interface and/or second interface. For example, when the second interface is a stock purchase interface and the second interface is locked, the user can only slide up and down to browse the stock purchase interface but cannot make a stock purchase on the interface; or when the second interface is a shopping interface and the second interface is locked, the user can only slide up and down to browse the shopping interface but cannot make payment on the interface.

For example, the electronic device may lock all controls on the first interface and/or the second interface so that the target operation transaction on the first interface and/or the second interface is in a locked state. Alternatively, a screenshot of displayed content in the first interface and/or the second interface may be taken while the first input of the user is received, so that the user is merely able to browse updated content displayed, at a moment when the electronic device receives the first input, on the first interface and/or the second interface, but cannot perform an operation on the updated content displayed on the first interface and/or the second interface.

Further, when the target operation transaction on the first interface and/or the second interface is in a locked state, a lock sign may be included on the display interface, so that the first interface and/or the second interface being in a locked state can remind the user that the target operation transaction on the interface is in a locked state.

In this embodiment of the present invention, the electronic device performs a lock operation on the target operation transaction on the first interface and/or the second interface to make the target operation transaction into a locked state.

In an example, the solution provided by this embodiment of the present invention is described by using the first application being a shopping APP as an example.

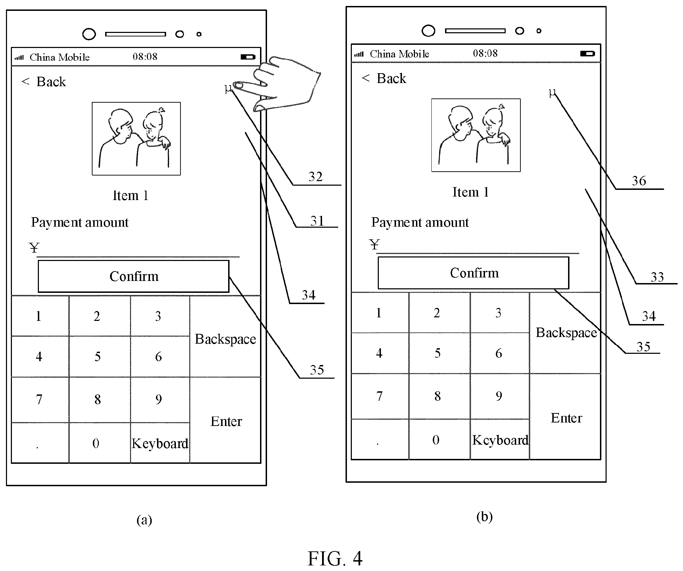

Example 1: The first sign is an interface. In a case that the electronic device also displays an icon sign 32 (that is, the first sign) in the upper right corner of a payment interface 31 of the item 1, after the electronic device receives a tap input (that is, the first input) by the user on the icon sign 32, as shown in (a) of FIG. 4, a payment interface 33 (that is, the second interface), as indicated by the icon sign 32, of the item 1 in the shopping APP is displayed on a display 34, as shown in (b) of FIG. 4, and a payment control 35 on the payment interface 33 is in a locked state.

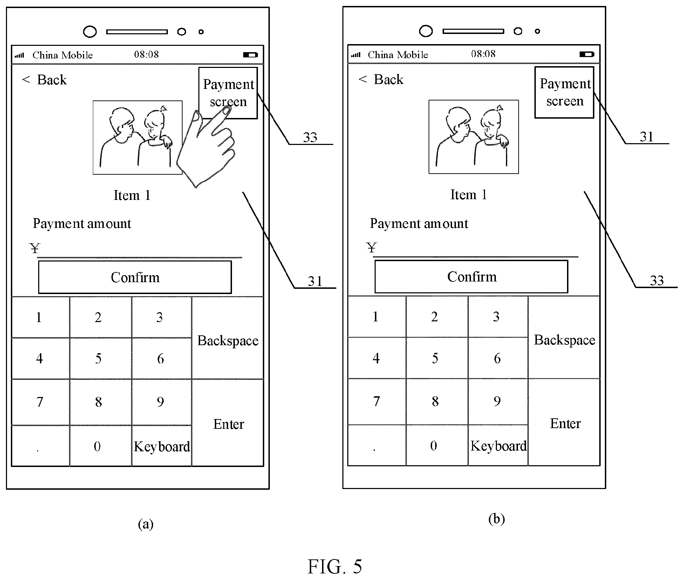

Example 2: With reference to example 1 and FIG. 4, as shown in (a) of FIG. 5, when the payment interface 33 (that is, the second interface) is displayed on the upper right of the payment interface 31, and an interface size of the payment interface 33 is smaller than an interface size of the payment interface 31, after the user taps on the payment interface 33, as shown in (b) of FIG. 5, the electronic device exchanges a display position of the payment interface 33 with a display position of the payment interface 31. At that time, the payment interface 31 is scaled down and displayed on the payment interface 33.

Optionally, in this embodiment of the present invention, step 203 may include the following step 203a.

Step 203a: The electronic device displays the second interface and a third sign in response to the first input.

For example, after the electronic device displays the second interface on the display, an interface function corresponding to the first interface is switched to run in the background, and at the same time, the electronic device updates the displayed first interface to the second interface, where the first interface may be an interface indicated by the first sign.

For example, after receiving the first input, the electronic device may switch the first interface to the second interface, and switch the first sign to the third sign, where the third sign is used to indicate the first interface. After a touch input is performed on the third sign, the electronic device may switch the second interface to the first interface, thereby facilitating flexible switching between different display interfaces in the first application by the user.

In an example, with reference to example 1, as shown in (b) of FIG. 4, the payment interface 31 is indicated by an icon sign 36, where the icon sign 36 is displayed in the same position as the icon sign 32.

In the interface display method provided in this embodiment of the present invention, in a case that an interface function corresponding to the second interface of the first application is run in the electronic device, the electronic device displays the first interface of the first application and the first sign. The first sign may be used to indicate the second interface, and the first interface and the second interface each include a non-repeatable-read target operation transaction. Subsequently, the electronic device may receive the first input by the user on the first sign, and therefore displays the second interface on a display, where the target operation transaction included in at least one of the first interface and the second interface is in a locked state. In this way, when the electronic device stores different display interfaces including a same target operation transaction in a same application, target operation transactions on some or all of the display interfaces may be locked to facilitate operations by the user on different display interfaces in the same application and help the user avoid misoperation, thereby ensuring security of user data in the electronic device and improving security of using the electronic device by the user.

Optionally, in this embodiment of the present invention, step 201 may include the following steps A1 and A2.

Step A1: The electronic device receives a second input in a case that the second interface of the first application is displayed.

Step A2: In response to the second input, the electronic device bufferes resources corresponding to the second interface, and displays the first interface of the first application and the first sign.

For example, in this embodiment of the present invention, step 203 may include the following step A3.

Step A3: In response to the first input, the electronic device displays the second interface based on the buffered resources corresponding to the second interface.

For example, for the second input, reference may be made to the foregoing descriptions of the first input. Details are not described herein again.

For example, the resources corresponding to the second interface may be data information indicated by or included in the second interface.

For example, the electronic device bufferes the resources corresponding to the second interface, so that the data information corresponding to the second interface may be run in the background in a buffered state.

For example, after receiving the first input, the electronic device displays on the display interface the data information of the second interface buffered in the background.

In this way, with the first sign on the first interface, the electronic device can provide the user with a channel for updating the display interface from the first interface to the second interface and updating the display interface from the second interface to the first interface.

Optionally, in this embodiment of the present invention, in a case that the target operation transaction included in the second interface is in an active state and the target operation transaction included in the first interface is in a locked state, the interface display method provided by this embodiment of the present invention further includes step B1 or step B2.

Step B1: In a case that the second interface is closed, the electronic device may switch the target operation transaction on the first interface from the locked state to an active state.

Step B2: In a case that a third input on the first sign is received, the electronic device cancels the display of the first sign and switches the target operation transaction on the first interface from the locked state to an active state.

For example, the active state indicates that the target operation transaction is in an operational state. In other words, the user can not only browse the target operation transaction, but also can perform an operation on the target operation transaction.

For example, the second interface being closed indicates that: the second interface is no longer stored in the electronic device.

It should be noted that when the second interface is closed, the electronic device just no longer stores displayed content of the second interface; and the electronic device may delete the resources corresponding to the second interface or may store the resources corresponding to the second interface in the electronic device.

For example, when the second interface is closed, the electronic device automatically updates the target operation transaction on the first interface from the locked state to the active state, so that the user can perform an operation on the target operation transaction on the first interface.

It should be noted that when the second interface is closed, the electronic device may display the first interface, or may display another interface. This is not limited in this embodiment of this application.

For example, for the third input, reference may be made to the foregoing descriptions of the first input. Details are not described herein again.

For example, when the electronic device cancels the display of the first sign and correspondingly closes the second interface indicated by the first sign, the electronic device automatically updates the target operation transaction on the first interface from the locked state to the active state, so that the user can perform an operation on the target operation transaction on the first interface.

In this way, when the electronic device includes only the target operation transaction of the first interface, the electronic device automatically changes the locked state of the target operation transaction on the first interface, thereby facilitating an operation on the target operation transaction performed by the user using the electronic device while ensuring data security of the electronic device.

Optionally, the interface display method provided in this embodiment of the present invention further includes the following step C1.

Step C1: The electronic device receives a fourth input for the target operation transaction.

Further, after step C1, the method may further include the following step C2 or C3.

Step C2: In a case that the target operation transaction is in the active state, the electronic device performs, in response to the fourth input, an operation corresponding to the target operation transaction.

Step C3: In a case that the target operation transaction is in the locked state, the electronic device skips responding to the fourth input.

For example, for the fourth input, reference may be made to the foregoing descriptions of the first input. Details are not described herein again.

For example, the fourth input may be an input for changing data of the target operation transaction. For example, if the target operation transaction is a payment transaction, entering a payment password is an input that can change payment data.

For example, the operation corresponding to the target operation transaction may be any operation that changes the data of the target operation transaction. For example, when the target operation transaction is a payment transaction, the payment data can be changed if the electronic device can perform a payment operation in response to a password input by the user on the electronic device.

In an example, the target operation transaction is a payment transaction, and the fourth input is entering a payment password. If the payment transaction is in the active state, after receiving the input of the payment password by the user, the electronic device may respond to the input password and perform the payment operation. On the contrary, if the payment transaction is in the locked state, after receiving the input of the payment password by the user, the electronic device may skip responding to the entered password. Accordingly, there is no subsequent payment operation.

In this way, in the case that the target operation transaction is in the active state, the electronic device may respond to the input of the user for the target operation transaction and perform a corresponding operation; otherwise, the electronic device may skip responding and perform no operation. In this way, the electronic device can perform a corresponding operation based on a status of the target operation transaction to accurately guarantee data security for the user.

Optionally, in this embodiment of the present invention, step 201 may include the following step D.

Step D: The electronic device displays the first interface and the second interface of the first application.

For example, a display area of the first interface partially overlaps a display area of the second interface, and the display area of the first interface is larger than the display area of the second interface.

Further, the interface size may be user-defined or preset by the electronic device, which is not limited in this embodiment of the present invention.

For example, the electronic device may simultaneously update the displayed content in the first interface and the displayed content in the second interface on a same display.

In this way, the electronic device may display the second interface on the first interface to more clearly show displayed content of different interfaces in the same application to the user. This helps the user to update the display interface in the application as required by the user.

Optionally, in this embodiment of the present invention, after step D, the interface display method provided by this embodiment of the present invention further includes the following steps E1 and E2.

Step E1: The electronic device receives a fifth input by the user on target content in the first interface.

Step E2: In response to the fifth input, the electronic device adds resources corresponding to the target content to the resources corresponding to the second interface.

For example, step 203 may include the following step E3.

Step E3: The electronic device displays the second interface in response to the first input.

For example, the second interface includes the target content.

For example, the target content may be text, picture, multimedia file, or the like on the display interface.

For example, the resources corresponding to the target content may be data information corresponding to the target content in the electronic device. For example, when the target content is text, the resources corresponding to the target content are text data information corresponding to the text in the electronic device; when the target content is a picture, the resources corresponding to the target content are picture data information corresponding to the picture in the electronic device; or when the target content is a multimedia file, the resources corresponding to the target content are multimedia file data information corresponding to the multimedia file in the electronic device.

For example, the resources corresponding to the second interface may be data information of the second interface buffered in the background or the second interface displayed directly on the display interface.

For example, the fifth input may be a touch input by the user on the display of the electronic device, for example, a tap input, a touch-and-hold input, a swipe input, or a drag input. In an example, the fifth input may be a combination of a touch-and-hold input and a drag input. For example, the second input may include: a selection input (for example, a touch-and-hold input) by the user on content displayed on the interface in a current display area, and a drag input for dragging the selected content to the second interface.

For example, the electronic device may add the resources corresponding to the target content to the resources corresponding to the second interface in a variety of manners.

In one manner, if an operation focus is displayed on the second interface, the electronic device may display the second interface and the target content; or if no operation focus is displayed on the second interface, the electronic device may automatically copy the target content to the clipboard.

It should be noted that the operation focus may be a cursor used for indicating an input position of displayed content such as text, or picture in the electronic device.

In another manner, the electronic device may display the second interface and additional information corresponding to the target content, where the additional information may be a name of the target content. For example, when the target content is a picture, the additional information may be a name of the picture, and when the target content is music, the additional information may be a name of the music.

For example, in a case that the second interface includes a plurality of display interfaces, when the fifth input of the user is received, thumbnails of different display interfaces corresponding to the first sign may automatically pop up on the first interface for the user to select one specific interface to which the to-be-transmitted content is finally transmitted.

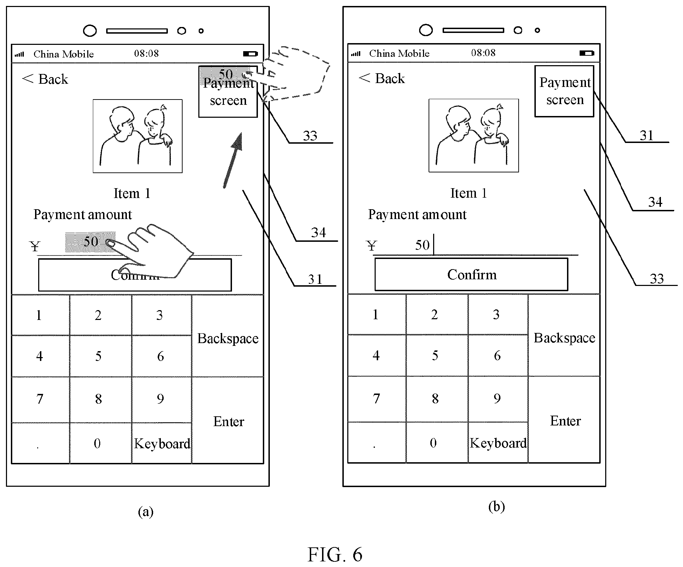

Example 3: With reference to example 2, when the user performs a select input on text content "50" (that is, the target displayed content) on the payment interface 31 and drags it to the payment interface 33 (that is, the fifth input), as shown in (a) of FIG. 6, the payment interface 31 displayed on the display 34 is switched to the payment interface 33, and the text content "50" transmitted by the user is displayed on the payment interface 33, as shown in (b) of FIG. 6.

In this way, the user can easily and quickly transmit content between different display interfaces using the fifth input, thereby saving an operation step of switching between different display interfaces required for transmitting content and significantly improving efficiency in use of the electronic device by the user.

Optionally, in this embodiment of the present invention, the first sign is used to indicate at least one target interface, where the at least one target interface includes the second interface, and may also include another interface. On this basis, in the interface display method provided by this embodiment of the present invention, step 203 includes the following steps F1 to F3.

Step F1: The electronic device displays a setting interface in response to the first input.

For example, the setting interface includes an interface thumbnail of each target interface.

Step F2: The electronic device receives a sixth input by the user on an interface thumbnail of the second interface.

Step F3: The electronic device displays the second interface in response to the sixth input.

For example, the setting interface may be an interface displayed on the first interface, or may be an interface displayed in a display area other than the first interface, or an interface displayed at a position of the first interface. This is not limited in this embodiment of the present invention.

For example, the interface thumbnail may include an interface thumbnail of the second interface, or may include an interface thumbnail of the first interface and an interface thumbnail of the second interface. For example, the setting interface may include both an interface thumbnail of the payment interface 31 and an interface thumbnail of the payment interface 33, or the setting interface may include only the interface thumbnail of the payment interface 31.

For example, when the displayed content in the first interface and/or the second interface is dynamically changed, a prompt sign may be displayed on the interface thumbnails corresponding to the first interface and/or the second interface to notify the user of a change of the display interface.

Further, the prompt sign may be a text sign or an icon sign, which is not limited in this embodiment of the present invention. For example, when the display interface receives a new message, a digit sign may be displayed above the interface thumbnail for indicating the display interface to notify the user of a new message received.

For example, the interface thumbnail of the second interface is a screenshot of the second interface at a moment when the electronic device receives the first input of the user. The electronic device scales down the screenshot to a same size as the interface thumbnail preset by the electronic device to form an interface thumbnail.

For example, for the sixth input, reference may be made to descriptions of the first input. Details are not described herein again.

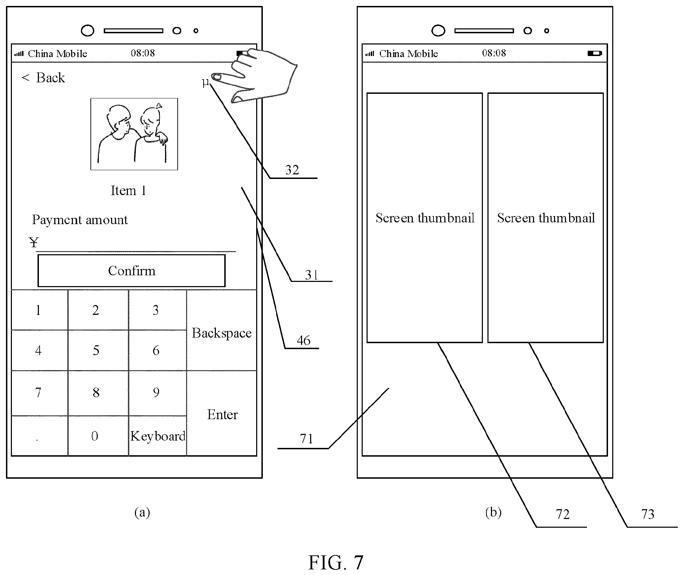

Example 4: With reference to example 1, after the electronic device receives a tap input by the user on the icon sign 32, as shown in (a) of FIG. 7, the electronic device displays a setting interface 71 above the payment interface 31 (that is, the first interface), as shown in (b) of FIG. 7, where the setting interface 71 includes an interface thumbnail 72 for indicating the payment interface 31 and an interface thumbnail 73 for indicating the payment interface 33. In this case, if the user performs a tap input (that is, the sixth input) on the interface thumbnail 73, the electronic device displays the payment interface 33 (that is, the second interface) on the display.

In this way, the user can select interface thumbnails for indicating different display interfaces on the setting interface, so that the user can more intuitively view a desired display interface and more quickly and accurately open the desired display interface, thereby improving efficiency in use of the electronic device by the user.

Optionally, in this embodiment of the present invention, the setting interface includes a target control. After step F1, the interface display method provided by this embodiment of the present invention further includes steps G1 and G2.

Step G1: The electronic device receives a seventh input by the user on the target control.

Step G2: The electronic device adds an interface thumbnail to the setting interface in response to the seventh input.

For example, the interface thumbnail includes an interface thumbnail of at least one interface in interface resources of the first application.

For example, for the seventh input, reference may be made to the foregoing descriptions of the first input. Details are not described herein again.

For example, the target control is used for adding an interface thumbnail of a display interface to the setting interface.

For example, the target control may be a control in a form of an icon or a control in a form of text, which is not limited by this embodiment of the present invention.

For example, the interface resources may be: display interfaces corresponding to interface data resources in the first application. It can be understood that the display interfaces corresponding to the interface data resources may include a display interface that is directly displayed to the user on the display interface, and may also include a display interface that is not directly displayed on the display interface but has a data resource in a background running state.

For example, an order of the interface thumbnails on the setting interface may be a default order in the electronic device or may be user-defined, which is not limited in this embodiment of the present invention.

For example, a prerequisite for adding an interface thumbnail to the setting interface by using the target control by the electronic device is that the user previously never sets, for a display interface, an interface thumbnail of the display interface on the setting interface.

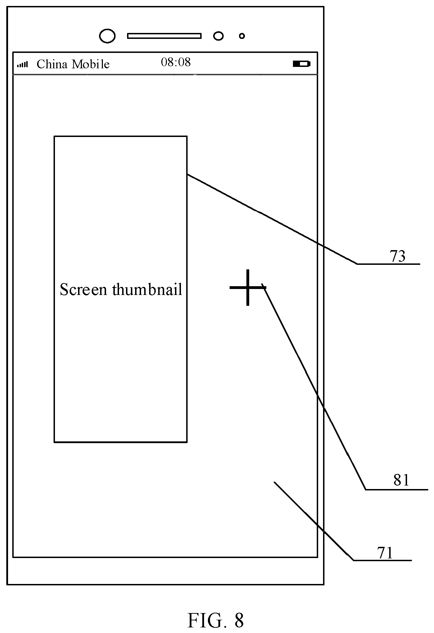

Example 5: With reference to example 4, as shown in FIG. 8, there is a "+" control 81 (that is, the target control) similar to a plus sign on the rightmost side of the setting interface 71. If the user previously never sets an interface thumbnail for the payment interface 31, the user taps on the "+" control (that is, the seventh input), and the electronic device automatically adds the interface thumbnail of the payment interface 31 behind the interface thumbnail 73.

In this way, the user can quickly set, for any display interface in the first application, an interface thumbnail of the display interface on the setting interface, so that the user can quickly retrieve the desired display interface in the first application.

Optionally, in this embodiment of the present invention, after step 201, the interface display method provided by this embodiment of the present invention further includes the following steps H1 to H3.

Step H1: The electronic device updates the first sign to a second sign.

Step H2: The electronic device receives an eighth input by the user on the second sign.

Step H3: The electronic device closes a third interface in response to the eighth input.

The third interface is an interface other than the first interface in the at least one target interface.

For example, the second sign is a close sign.

For example, the second sign may be used for closing the display interface of the first application.

For example, the second sign may be a text sign or an icon sign, which is not limited in this embodiment of the present invention.

For example, if the user needs to close an interface other than the first interface, the electronic device may automatically update the first sign to the second sign, or the user may manually update the first sign to the second sign. This is not limited in this embodiment of the present invention.

In one example, when the electronic device detects completion of the target operation transaction on the first interface, the electronic device may automatically update the first sign to the second sign for the user to close another display interface.

In one example, when the electronic device is displaying the first interface, the user may perform a specified input for updating the first sign to the second sign to the electronic device, for example, double-tapping any position on the first interface or perform a touch-and-hold input on the first sign, so as to trigger an operation of updating the first sign by the electronic device.

It should be noted that the second sign may be a sign only for closing a display interface including the target operation transaction.

It should be noted that the first interface may be or may not be a display interface latest opened by the user, which is not limited in this embodiment of the present invention.

For example, for the fifth input, reference may be made to the foregoing descriptions of the first input. Details are not described herein again.

Example 6: With reference to example 1, when the electronic device displays the payment interface 31 and displays the icon sign 32 on the payment interface 31, the user may perform a double-tap input on the payment interface 31. Then, the icon sign 32 is switched to the second sign, where the second sign is used for closing a display interface (that is, the third interface) in the first application other than the current payment interface 31 (that is, the first interface). The user may perform a slide-up input on the second sign, so that the electronic device directly performs an operation of closing the payment interface 33.

In this way, in a case that the second sign indicates a plurality of interfaces, the user can quickly close some display interfaces in the first application, rather than close the plurality of display interfaces in turn, thereby reducing time consumed in the closing operation and improving work efficiency.

Optionally, in this embodiment of the present invention, in a case that the displayed content in the first interface does not include the latest target operation transaction, after step 201, the interface display method further includes the following steps I1 to I3.

Step I1: The electronic device updates the first sign to the third sign.

Step I2: The electronic device receives a ninth input by the user on the third sign.

Step I3: The electronic device updates the first interface to a fourth interface in response to the ninth input.

The fourth interface includes the latest target operation transaction.

For example, for the third sign, reference may be made to the foregoing descriptions of the second sign. Details are not described herein again.

For example, the third sign is an update sign.

For example, the third sign is used for updating the current display interface to a display interface including the latest operation transaction.

For example, for the ninth input, reference may be made to the foregoing descriptions of the first input. Details are not described herein again.

For example, the latest operation transaction is the last interface including the target operation transaction opened by the user.

For example, if the user needs to update the first interface to an interface including the latest operation transaction other than the first interface, the updating of the first sign to the third sign by the electronic device may be preset by the electronic device, or may be user-defined, which is not limited in this embodiment of the present invention.

In one example, when the electronic device is displaying the first interface, the user may perform, on the electronic device, a specified input for updating the first sign to the third sign, for example, performing a double-tap input on a volume-up button, to trigger the operation of updating the first sign by the electronic device.

Example 7: With reference to example 1, when the payment interface 31 does not include the latest operation transaction, but the payment interface 33 includes the latest operation transaction, the user may perform a slide input from both sides to the middle (that is, the ninth input) on the display of the electronic device. Then, the icon sign 32 is switched to the third sign, where the third sign is used for updating the current payment interface 31 to the display interface including the latest operation transaction in the first application. The user performs a tap input on the third sign, so that the electronic device directly updates the current payment interface 31 to the payment interface 33.

In this way, in a case that a plurality of display interfaces are stored in the first application, if the user needs to retrieve a display interface including the latest target operation transaction, the user may directly update the current display interface by using the third sign, which greatly improves operating efficiency.

It should be noted that, in the embodiments of the present invention, the interface display methods shown in the accompanying drawing are exemplarily described by using examples of the accompanying drawings in the embodiments of the present invention. In specific implementation, the interface display methods shown in the accompanying drawings may be further implemented with reference to any other combinable accompanying drawings as illustrated in the foregoing embodiments. Details are not described herein again.

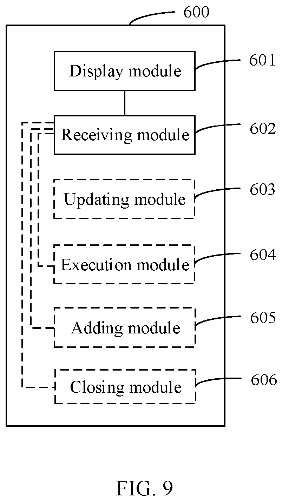

FIG. 9 is a schematic diagram of a possible structure of an interface display apparatus for implementing the embodiments of the present invention. As shown in the figure, the interface display apparatus 600 includes a display module 601 and a receiving module 602. The display module 601 is configured to display a first interface of a first application and a first sign, where the first sign is used to indicate a second interface of the first application, and the second interface includes a non-repeatable-read target operation transaction. The receiving module 602 is configured to receive a first input by a user on the first sign displayed by the display module 601. The display module 601 is further configured to display the second interface in response to the first input received by the receiving module 602, where the target operation transaction included in at least one of the first interface and the second interface is in a locked state.

Optionally, in this embodiment of the present invention, the receiving module 602 is configured to receive a second input in a case that the second interface of the first application is displayed. The display module 601 is specifically configured to: in response to the second input received by the receiving module 602, buffer resources corresponding to the second interface, and display the first interface of the first application and the first sign. The display module 601 is further specifically configured to: in response to the first input received by the receiving module 602, display the second interface based on the buffered resources corresponding to the second interface.

Optionally, in this embodiment of the present invention, the apparatus 600 further includes an updating module 603. The updating module 603 is configured to: in a case that the second interface is closed, switch the target operation transaction on the first interface from the locked state to an active state; or in a case that a third input on the first sign is received, cancel the display of the first sign and switch the target operation transaction on the first interface from the locked state to an active state.

Optionally, in this embodiment of the present invention, the apparatus 600 further includes an execution module 604. The receiving module 602 is further configured to receive a fourth input for the target operation transaction. The execution module 604 is configured to: in a case that the target operation transaction is in the active state, perform, in response to the fourth input received by the receiving module 602, an operation corresponding to the target operation transaction. The execution module 604 is further configured to: in a case that the target operation transaction is in the locked state, skip responding to the fourth input received by the receiving module.

Optionally, in this embodiment of the present invention, the first sign is the second interface. The display module 601 is specifically configured to display the first interface and the second interface of the first application, where a display area of the first interface partially overlaps a display area of the second interface, and the display area of the first interface is larger than the display area of the second interface.

Optionally, in this embodiment of the present invention, the apparatus 600 further includes an adding module 605. The receiving module 602 is further configured to receive a fifth input by the user on target content in the first interface. The adding module 605 is configured to add, in response to the fifth input received by the receiving module 602, resources corresponding to the target content to resources corresponding to the second interface. The display module 601 is specifically configured to display the second interface in response to the first input received by the receiving module 602, where the second interface includes the target content.

Optionally, in this embodiment of the present invention, the first sign is used to indicate at least one target interface, and the at least one target interface includes the second interface. The display module 601 is specifically configured to display a setting interface in response to the first input received by the receiving module 602, where the setting interface includes an interface thumbnail of each target interface. The receiving module 602 is specifically configured to receive a sixth input by the user on an interface thumbnail of the second interface displayed by the display module. The display module 601 is further specifically configured to: display the second interface in response to the sixth input received by the receiving module 602.

Optionally, in this embodiment of the present invention, the setting interface includes a target control, and the apparatus further includes an execution module 604. The receiving module 602 is further configured to receive a seventh input by the user on the target control. The execution module 604 is configured to add an interface thumbnail to the setting interface in response to the seventh input received by the receiving module 602.

Optionally, in this embodiment of the present invention, the apparatus further includes an updating module 603 and a closing module 606. The updating module 603 is configured to update the first sign displayed by the display module 601 to a second sign. The receiving module 602 is further configured to receive an eighth input by the user on the second sign updated by the updating module 603. The closing module 606 is configured to close a third interface in response to the eighth input received by the receiving module 602, where the third interface is an interface other than the second interface in the at least one target interface.

According to the interface display apparatus provided in this embodiment of the present invention, in a case that an interface function corresponding to the second interface of the first application is run in an electronic device, the interface display apparatus displays the first interface of the first application and the first sign. The first sign may be used to indicate the second interface, and the first interface and the second interface each include a non-repeatable-read target operation transaction. Subsequently, the electronic device may receive the first input by the user on the first sign, and therefore displays the second interface on a display, where the target operation transaction included in at least one of the first interface and the second interface is in a locked state. In this way, when the interface display apparatus stores different display interfaces including a same target operation transaction in a same application, target operation transactions on some or all of the display interfaces may be locked to facilitate operations by the user on different display interfaces in the same application and help the user avoid misoperation, thereby ensuring security of user data in the electronic device and improving security of using the electronic device by the user.

The electronic device provided in this embodiment of the present invention can implement the processes implemented by an electronic device in the foregoing method embodiment. To avoid repetition, details are not described herein again.

It should be noted that, as shown in FIG. 9, a module that is necessarily included in the interface display apparatus 600 is indicated by a solid box, for example, the display module 601; and a module that is optionally included in the interface display apparatus 600 is indicated by a dashed box, for example, the updating module 603.

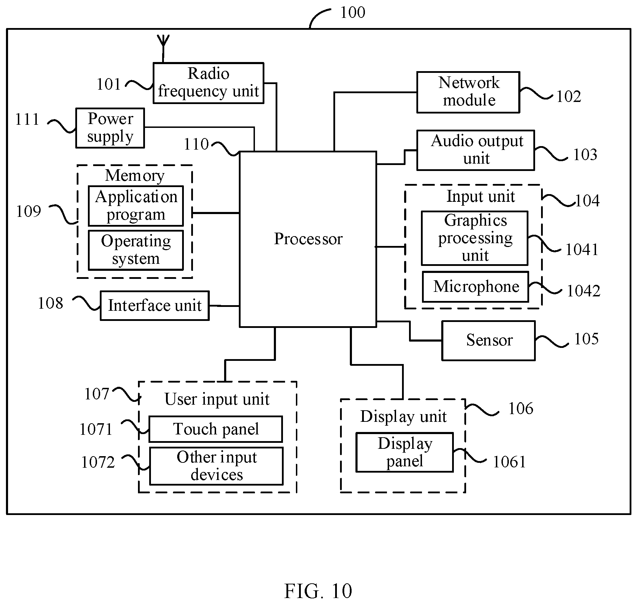

FIG. 10 is a schematic structural diagram of a hardware of an electronic device implementing the embodiments of the present invention. The electronic device 100 includes but is not limited to: a radio frequency unit 101, a network module 102, an audio output unit 103, an input unit 104, a sensor 105, a display unit 106, a user input unit 107, an interface unit 108, a memory 109, a processor 110, a power supply 111, and other components. A person skilled in the art may understand that a structure of the electronic device 100 shown in FIG. 10 constitutes no limitation on the electronic device, and the electronic device 100 may include more or fewer components than those shown in the figure, or have some components combined, or have a different component arrangement. In this embodiment of the present invention, the electronic device 100 includes but is not limited to a mobile phone, a tablet computer, a notebook computer, a palmtop computer, an in-vehicle electronic device, a wearable device, a pedometer, and the like.

The display unit 106 is configured to display a first interface of a first application and a first sign, where the first sign is used to indicate the second interface described above, and the second interface includes a non-repeatable-read target operation transaction. The user input unit 107 is configured to receive a first input by a user on the first sign displayed by the display unit 106. The processor 110 is configured to display the second interface in response to the first input received by the user input unit 107, where the target operation transaction included in at least one of the first interface and the second interface is in a locked state.

In this embodiment of the present invention, in a case that an interface function corresponding to the second interface of the first application is run in the electronic device, the electronic device displays the first interface of the first application and the first sign. The first sign may be used to indicate the second interface, and the first interface and the second interface each include a non-repeatable-read target operation transaction. Subsequently, the electronic device may receive the first input by the user on the first sign, and therefore displays the second interface on a display, where the target operation transaction included in at least one of the first interface and the second interface is in a locked state. In this way, when the electronic device stores different display interfaces including a same target operation transaction in a same application, target operation transactions on some or all of the display interfaces may be locked to facilitate operations by the user on different display interfaces in the same application and help the user avoid misoperation, thereby ensuring security of user data in the electronic device and improving security of using the electronic device by the user.

It should be understood that, in this embodiment of the present invention, the radio frequency unit 101 may be configured to receive and send information, or receive and send a signal in a call process. Specifically, the radio frequency unit 101 receives downlink data from a base station, and transmits the downlink data to the processor 110 for processing; and in addition, sends uplink data to the base station. Generally, the radio frequency unit 101 includes but is not limited to an antenna, at least one amplifier, a transceiver, a coupler, a low noise amplifier, a duplexer, and the like. In addition, the radio frequency unit 101 may further communicate with a network and another device through a wireless communication system.

The electronic device 100 provides a user with wireless broadband Internet access through the network module 102, for example, helps the user send and receive emails, browse web pages, and access streaming media.

The audio output unit 103 may convert audio data received by the radio frequency unit 101 or the network module 102 or stored in the memory 109 into an audio signal, and output the audio signal as a sound. In addition, the audio output unit 103 may further provide an audio output (for example, a call signal receiving sound or a message receiving sound) that is related to a specific function performed by the electronic device 100. The audio output unit 103 includes a speaker, a buzzer, a receiver, and the like.

The input unit 104 is configured to receive an audio or video signal. The input unit 104 may include a graphics processing unit (Graphics Processing Unit, GPU) 1041 and a microphone 1042. The graphics processing unit 1041 processes image data of a static image or a video obtained by an image capturing apparatus (for example, a camera) in a video capturing mode or an image capturing mode. A processed image frame may be displayed on the display unit 106. The image frame processed by the graphics processing unit 1041 may be stored in the memory 109 (or another storage medium) or transmitted via the radio frequency unit 101 or the network module 102. The microphone 1042 may receive sound and can process such sound into audio data. The processed audio data may be converted, in telephone call mode, into a format that can be sent to a mobile communication base station via the radio frequency unit 101 for output.

The electronic device 100 further includes at least one sensor 105, such as a light sensor, a motion sensor, and another sensor. Specifically, the optical sensor includes an ambient light sensor and a proximity sensor, where the ambient light sensor can adjust brightness of the display panel 1061 based on luminance of ambient light, and the proximity sensor can turn off the display panel 1061 and/or backlight when the electronic device 100 moves close to an ear. As a type of motion sensor, an accelerometer sensor can detect magnitudes of accelerations in all directions (usually three axes), can detect a magnitude and a direction of gravity when the electronic device is in a static state, and can be used to recognize posture of the electronic device (such as screen switching between portrait and landscape, a related game, and magnetometer posture calibration), functions related to vibration recognition (such as pedometer and tapping), and the like. The sensor 105 may also include a fingerprint sensor, a pressure sensor, an iris sensor, a molecular sensor, a gyroscope, a barometer, a hygrometer, a thermometer, an infrared sensor, and the like. Details are not described herein.

The display unit 106 is configured to display information input by the user or information provided for the user. The display unit 106 may include a display panel 1061, and the display panel 1061 may be configured in a form of liquid crystal display (Liquid Crystal Display, LCD), organic light-emitting diode (Organic Light-Emitting Diode, OLED), or the like.

The user input unit 107 may be configured to receive input digit or character information and generate a key signal input related to a user setting and function control of the electronic device 100. Specifically, the user input unit 107 includes a touch panel 1071 and other input devices 1072. The touch panel 1071, also referred to as a touchscreen, may capture a touch operation performed by a user on or near the touch panel 1071 (for example, an operation performed by a user on or near the touch panel 1071 by using any appropriate object or accessory such as a finger or a stylus). The touch panel 1071 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into touch point coordinates, transmits the touch point coordinates to the processor 110, and receives and executes a command sent by the processor 110. In addition, the touch panel 1071 may be implemented in various types such as resistive, capacitive, infrared, and surface acoustic wave. In addition to the touch panel 1071, the user input unit 107 may further include the other input devices 1072. Specifically, the other input devices 1072 may include but are not limited to a physical keyboard, a functional button (such as a volume control button or a power on/off button), a trackball, a mouse, and a joystick. Details are not described herein.

Further, the touch panel 1071 may cover the display panel 1061. When detecting a touch operation on or near the touch panel 1071, the touch panel 1071 transmits the touch operation to the processor 110 to determine a type of a touch event. Then the processor 110 provides corresponding visual output on the display panel 1061 based on the type of the touch event. Although the touch panel 1071 and the display panel 1061 in FIG. 10 are configured as two independent components to implement input and output functions of the electronic device 100, in some embodiments, the touch panel 1071 and the display panel 1061 may be integrated to implement the input and output functions of the electronic device 100. This is not specifically limited herein.

The interface unit 108 is an interface for connecting an external apparatus to the electronic device 100. For example, the external apparatus may include a wired or wireless headphone jack, an external power supply (or a battery charger) port, a wired or wireless data port, a storage card port, a port for connecting an apparatus having an identification module, an audio input/output (I/O) port, a video I/O port, a headphone jack, or the like. The interface unit 108 may be configured to receive an input (for example, data information and power) from an external apparatus and transmit the received input to one or more elements in the electronic device 100 or may be configured to transmit data between the electronic device 100 and the external apparatus.

The memory 109 may be configured to store a software program and various data. The memory 109 may mainly include a program storage area and a data storage area. The program storage area may store an operating system, an application program required by at least one function (for example, an audio playing function and an image playing function), and the like. The data storage area may store data (for example, audio data and an address book) created according to use of the mobile phone. In addition, the memory 109 may include a high-speed random access memory, and may further include a non-volatile memory, for example, at least one magnetic disk storage device, a flash storage device, or another volatile solid-state storage device.

The processor 110 is a control center of the electronic device 100, connects all parts of the entire electronic device 100 by using various interfaces and lines, and performs various functions of the electronic device 100 and data processing by running or executing a software program and/or a module stored in the memory 109 and by invoking data stored in the memory 109, so as to perform overall monitoring on the electronic device 100. The processor 110 may include one or more processing units. Optionally, the processor 110 may be integrated with an application processor and a modem processor. The application processor mainly processes an operating system, a user interface, an application program, and the like, and the modem processor mainly processes wireless communication. It may be understood that, the modem processor may alternatively not be integrated into the processor 110.

The electronic device 100 may further include the power supply 111 (for example, a battery) that supplies power to various components. Optionally, the power supply 111 may be logically connected to the processor 110 through a power supply management system, so that functions such as charging and discharging management and power consumption management are implemented through the power management system.

In addition, the electronic device 100 includes some functional modules not shown. Details are not described herein.

Optionally, an embodiment of the present invention further provides an electronic device, including a processor, a memory, and a computer program stored in the memory and capable of running on the processor 110. When the computer program is executed by the processor, the processes of the foregoing interface display method embodiment are implemented, with same technical effects achieved. To avoid repetition, details are not described herein again.

An embodiment of the present invention further provides a readable storage medium. The readable storage medium stores a program or instructions. When the program or instructions are executed by a processor, the processes of the foregoing interface display method embodiment are implemented, with same technical effects achieved. To avoid repetition, details are not described herein again. The processor is a processor in the electronic device in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface, and the communications interface is coupled to the processor. The processor is configured to run a program or instructions to implement the processes of the foregoing interface display method embodiment, with same technical effects achieved. To avoid repetition, details are not described herein again.

It should be understood that the chip mentioned in this embodiment of this application may also be referred to as a system-on-a-chip.

It should be noted that, in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such process, method, article, or apparatus. In the absence of more restrictions, an element defined by "including a ..." does not exclude another same element in a process, method, article, or apparatus that includes the element.

By means of the foregoing descriptions of the implementations, persons skilled in the art may clearly understand that the method in the foregoing embodiments may be implemented by software with a necessary general hardware platform. Certainly, the method in the foregoing embodiments may alternatively be implemented by hardware. However, in many cases, the former is a preferred implementation. Based on such an understanding, the technical solutions of the present invention essentially or the part contributing to the prior art may be implemented in a form of a software product. The computer software product is stored in a storage medium (such as a ROM/RAM, a hard disk, or an optical disc), and includes several instructions for instructing a terminal device (which may be a mobile phone, a computer, a server, an air conditioner, a network device, or the like) to perform the methods described in the embodiments of the present invention.

## Claims

1. An interface display method performed by an electronic device, **characterized in that**, comprising:
displaying a first interface of a first application and a first sign (201), wherein the first sign is used to indicate a second interface of the first application, and the first interface and the second interface each comprise a non-repeatable-read target operation transaction;
receiving a first input by a user on the first sign (202); and
displaying the second interface in response to the first input (203), wherein the target operation transaction comprised in at least one of the first interface and the second interface is in a locked state;
wherein the target operation transaction included in the first interface and the second interface is a same operation transaction.

2. The method according to claim 1, wherein the displaying a first interface of a first application and a first sign comprises:
receiving a second input in a case that the second interface of the first application is displayed; and
in response to the second input, buffering resources corresponding to the second interface, and displaying the first interface of the first application and the first sign; and
the displaying the second interface in response to the first input comprises:
in response to the first input, displaying the second interface based on the buffered resources corresponding to the second interface.

3. The method according to claim 1, wherein the method further comprises:
in a case that the second interface is closed, switching the target operation transaction on the first interface from the locked state to an active state; or
in a case that a third input on the first sign is received, canceling the display of the first sign and switching the target operation transaction on the first interface from the locked state to an active state.

4. The method according to claim 3, wherein the method further comprises:
receiving a fourth input for the target operation transaction; and
in a case that the target operation transaction is in the active state, performing, in response to the fourth input, an operation corresponding to the target operation transaction; or
in a case that the target operation transaction is in the locked state, skipping responding to the fourth input.

5. The method according to claim 1, wherein the first sign is the second interface; and
the displaying a first interface of a first application and a first sign comprises:
displaying the first interface and the second interface of the first application, wherein a display area of the first interface partially overlaps a display area of the second interface, and the display area of the first interface is larger than the display area of the second interface.

6. The method according to claim 5, wherein after the displaying the first interface and the second interface of the first application, the method further comprises:
receiving a fifth input by the user on target content in the first interface; and
adding, in response to the fifth input, resources corresponding to the target content to resources corresponding to the second interface; and
the displaying the second interface in response to the first input comprises:
displaying the second interface in response to the first input, wherein the second interface comprises the target content.

7. The method according to claim 1, wherein the first sign is used to indicate at least one target interface, the at least one target interface comprising the second interface; and
the displaying the second interface in response to the first input comprises:
displaying a setting interface in response to the first input, the setting interface comprising an interface thumbnail of each target interface;
receiving a sixth input by the user on an interface thumbnail of the second interface; and
displaying the second interface in response to the sixth input.

8. The method according to claim 7, wherein the setting interface comprises a target control, and after the displaying a setting interface, the method further comprises:
receiving a seventh input by the user on the target control; and
adding an interface thumbnail to the setting interface in response to the seventh input.

9. The method according to claim 7, wherein after the displaying a first interface of a first application and a first sign, the method further comprises:
updating the first sign to a second sign;
receiving an eighth input by the user on the second sign; and
closing a third interface in response to the eighth input; wherein
the third interface is an interface other than the first interface in the at least one target interface.

10. An interface display apparatus (600), applied to an electronic device, **characterized in that**, comprising a display module (601) and a receiving module (602);
the display module (601) is configured to display a first interface of a first application and a first sign, wherein the first sign is used to indicate a second interface of the first application, and the first interface and the second interface each comprise a non-repeatable-read target operation transaction;
the receiving module (602) is configured to receive a first input by a user on the first sign displayed by the display module; and
the display module (601) is further configured to display the second interface in response to the first input received by the receiving module, wherein the target operation transaction comprised in at least one of the first interface and the second interface is in a locked state;
wherein the target operation transaction included in the first interface and the second interface is a same operation transaction.

11. The apparatus according to claim 10, wherein
the receiving module (602) is configured to receive a second input in a case that the second interface of the first application is displayed;
the display module (601) is configured to: in response to the second input received by the receiving module, buffer resources corresponding to the second interface, and display the first interface of the first application and the first sign; and
the display module (601) is further configured to: in response to the first input received by the receiving module, display the second interface based on the buffered resources corresponding to the second interface.

12. The apparatus according to claim 10, wherein the apparatus further comprises an updating module (603), and an execution module (604);
the updating module (603) is configured to: in a case that the second interface is closed, switch the target operation transaction on the first interface from the locked state to an active state; or
in a case that a third input on the first sign is received, cancel the display of the first sign and switch the target operation transaction on the first interface from the locked state to an active state;
the receiving module (602) is further configured to receive a fourth input for the target operation transaction; and
the execution module (604) is configured to: in a case that the target operation transaction is in the active state, perform, in response to the fourth input received by the receiving module, an operation corresponding to the target operation transaction; or
the execution module (604) is further configured to: in a case that the target operation transaction is in the locked state, skip responding to the fourth input received by the receiving module.

13. The apparatus according to claim 10, wherein the first sign is the second interface; and
the display module (601) is configured to display the first interface and the second interface of the first application; wherein
a display area of the first interface partially overlaps a display area of the second interface, and the display area of the first interface is larger than the display area of the second interface.

14. An electronic device (100), comprising:
a processor (110); and
a memory (109) storing a program or instructions that are capable of running on the processor (110), wherein the program or instructions, when executed by the processor (110), cause the electronic device (100) to perform the interface display method according to any one of claims 1 to 9.

15. A readable storage medium storing a program or instruction, **characterized in that**, the program or instruction, when executed by a processor, performs the interface display method according to any one of claims 1 to 9.

## Patentansprüche

1. Schnittstellenanzeigeverfahren, durchgeführt von einer elektronischen Vorrichtung, **dadurch gekennzeichnet, dass** es Folgendes umfasst:
Anzeigen einer ersten Schnittstelle einer ersten Anwendung und eines ersten Symbols (201), wobei das erste Symbol dazu genutzt wird, eine zweite Schnittstelle der ersten Anwendung anzugeben, und die erste Schnittstelle und die zweite Schnittstelle jeweils eine Zieloperationstransaktion des nicht wiederholbaren Lesens umfassen;
Empfangen einer ersten Eingabe durch einen Benutzer auf dem ersten Symbol (202); und
Anzeigen der zweiten Schnittstelle in Reaktion auf die erste Eingabe (203), wobei die in mindestens einer von der ersten Schnittstelle und der zweiten Schnittstelle enthaltene Zieloperationstransaktion in einem gesperrten Zustand ist;
wobei die in der ersten Schnittstelle und der zweiten Schnittstelle enthaltene Zieloperationstransaktion eine gleiche Operationstransaktion ist.

2. Verfahren nach Anspruch 1, wobei das Anzeigen einer ersten Schnittstelle einer ersten Anwendung und eines ersten Symbols Folgendes umfasst:
Empfangen einer zweiten Eingabe in einem Fall, in dem die zweite Schnittstelle der ersten Anwendung angezeigt wird; und
in Reaktion auf die zweite Eingabe Puffern von Ressourcen, die der zweiten Schnittstelle entsprechen, und Anzeigen der ersten Schnittstelle der ersten Anwendung und des ersten Symbols; und
wobei das Anzeigen der zweiten Schnittstelle in Reaktion auf die erste Eingabe Folgendes umfasst:
in Reaktion auf die erste Eingabe Anzeigen der zweiten Schnittstelle auf Grundlage der gepufferten Ressourcen, die der zweiten Schnittstelle entsprechen.

3. Verfahren nach Anspruch 1, wobei das Verfahren ferner Folgendes umfasst:
in einem Fall, in dem die zweite Schnittstelle geschlossen ist, Umschalten der Zieloperationstransaktion an der ersten Schnittstelle vom gesperrten Zustand in einen aktiven Zustand; oder
in einem Fall, in dem eine dritte Eingabe auf dem ersten Symbol empfangen wird, Beenden der Anzeige des ersten Symbols und Umschalten der Zieloperationstransaktion an der ersten Schnittstelle vom gesperrten Zustand in einen aktiven Zustand.

4. Verfahren nach Anspruch 3, wobei das Verfahren ferner Folgendes umfasst:
Empfangen einer vierten Eingabe für die Zieloperationstransaktion; und
in einem Fall, in dem die Zieloperationstransaktion im aktiven Zustand ist, Durchführen, in Reaktion auf die vierte Eingabe, einer Operation entsprechend der Zieloperationstransaktion; oder
in einem Fall, in dem die Zieloperationstransaktion im gesperrten Zustand ist, Überspringen des Reagierens auf die vierte Eingabe.

5. Verfahren nach Anspruch 1, wobei das erste Symbol die zweite Schnittstelle ist; und
das Anzeigen einer ersten Schnittstelle einer ersten Anwendung und eines ersten Symbols Folgendes umfasst:
Anzeigen der ersten Schnittstelle und der zweiten Schnittstelle der ersten Anwendung, wobei ein Anzeigebereich der ersten Schnittstelle einen Anzeigebereich der zweiten Schnittstelle teilweise überlappt und der Anzeigebereich der ersten Schnittstelle größer ist als der Anzeigebereich der zweiten Schnittstelle.

6. Verfahren nach Anspruch 5, wobei das Verfahren nach dem Anzeigen der ersten Schnittstelle und der zweiten Schnittstelle der ersten Anwendung ferner Folgendes umfasst:
Empfangen einer fünften Eingabe durch den Benutzer zu Zielinhalt in der ersten Schnittstelle; und
Hinzufügen, in Reaktion auf die fünfte Eingabe, von Ressourcen, die dem Zielinhalt entsprechen, zu Ressourcen, die der zweiten Schnittstelle entsprechen; und
wobei das Anzeigen der zweiten Schnittstelle in Reaktion auf die erste Eingabe Folgendes umfasst:
Anzeigen der zweiten Schnittstelle in Reaktion auf die erste Eingabe, wobei die zweite Schnittstelle den Zielinhalt umfasst.

7. Verfahren nach Anspruch 1, wobei das erste Symbol verwendet wird, um mindestens eine Zielschnittstelle anzugeben, wobei die mindestens eine Zielschnittstelle die zweite Schnittstelle umfasst; und
wobei das Anzeigen der zweiten Schnittstelle in Reaktion auf die erste Eingabe Folgendes umfasst:
Anzeigen einer Einrichtungsschnittstelle in Reaktion auf die erste Eingabe, wobei die Einrichtungsschnittstelle eine Schnittstellenminiaturansicht jeder Zielschnittstelle umfasst;
Empfangen einer sechsten Eingabe durch den Benutzer auf einer Schnittstellenminiaturansicht der zweiten Schnittstelle; und
Anzeigen zweiten Schnittstelle in Reaktion auf die sechste Eingabe.

8. Verfahren nach Anspruch 7, wobei die Einrichtungsschnittstelle ein Zielbedienelement umfasst und das Verfahren nach dem Anzeigen der Einrichtungsschnittstelle ferner Folgendes umfasst:
Empfangen einer siebenten Eingabe durch den Benutzer auf dem Zielbedienelement; und
Hinzufügen einer Schnittstellenminiaturansicht zu der Einrichtungsschnittstelle in Reaktion auf die siebente Eingabe.

9. Verfahren nach Anspruch 7, wobei das Verfahren nach dem Anzeigen einer ersten Schnittstelle einer ersten Anwendung und eines ersten Symbols ferner Folgendes umfasst:
Aktualisieren des ersten Symbols auf ein zweites Symbol;
Empfangen einer achten Eingabe durch den Benutzer auf dem zweiten Symbol; und
Schließen einer dritten Schnittstelle in Reaktion auf die achte Eingabe; wobei
die dritte Schnittstelle in der mindestens einen Zielschnittstelle eine andere Schnittstelle als die erste Schnittstelle ist.

10. Schnittstellenanzeigevorrichtung (600), angebracht auf einer elektronischen Vorrichtung, **dadurch gekennzeichnet, dass** sie ein Anzeigemodul (601) und ein Empfangsmodul (602) umfasst;
wobei das Anzeigemodul (601) dazu konfiguriert ist, eine erste Schnittstelle einer ersten Anwendung und ein erstes Symbol anzuzeigen, wobei das erste Symbol dazu genutzt wird, eine zweite Schnittstelle der ersten Anwendung anzugeben, und die erste Schnittstelle und die zweite Schnittstelle jeweils eine Zieloperationstransaktion des nicht wiederholbaren Lesens umfassen;
das Empfangsmodul (602) dazu konfiguriert ist, eine erste Eingabe durch einen Benutzer auf dem durch das Anzeigemodul angezeigten ersten Symbol zu empfangen; und
das Anzeigemodul (601) ferner dazu konfiguriert ist, in Reaktion auf die vom Empfangsmodul empfangene erste Eingabe die zweite Schnittstelle anzuzeigen, wobei die in mindestens einer von der ersten Schnittstelle und der zweiten Schnittstelle enthaltene Zieloperationstransaktion in einem gesperrten Zustand ist;
wobei die in der ersten Schnittstelle und der zweiten Schnittstelle enthaltene Zieloperationstransaktion eine gleiche Operationstransaktion ist.

11. Vorrichtung nach Anspruch 10, wobei
das Empfangsmodul (602) dazu konfiguriert ist, in einem Fall, in dem die zweite Schnittstelle der ersten Anwendung angezeigt wird, eine zweite Eingabe zu empfangen;
das Anzeigemodul (601) dazu konfiguriert ist, in Reaktion auf die von dem Empfangsmodul empfangene zweite Eingabe Ressourcen, die der zweiten Schnittstelle entsprechen, zu puffern und die erste Schnittstelle der ersten Anwendung und das erste Symbol anzuzeigen; und
das Anzeigemodul (601) ferner dazu konfiguriert ist, in Reaktion auf die von dem Empfangsmodul empfangene erste Eingabe auf Grundlage der gepufferten Ressourcen, die der zweiten Schnittstelle entsprechen, die zweite Schnittstelle anzuzeigen.

12. Vorrichtung nach Anspruch 10, wobei die Vorrichtung ferner ein Aktualisierungsmodul (603) und ein Ausführungsmodul (604) umfasst;
das Aktualisierungsmodul (603) dazu konfiguriert ist, in einem Fall, in dem die zweite Schnittstelle geschlossen ist, die Zieloperationstransaktion an der ersten Schnittstelle vom gesperrten Zustand in einen aktiven Zustand umzuschalten; oder
in einem Fall, in dem eine dritte Eingabe auf dem ersten Symbol empfangen wird, die Anzeige des ersten Symbols zu beenden und die Zieloperationstransaktion an der ersten Schnittstelle vom gesperrten Zustand in einen aktiven Zustand umzuschalten;
wobei das Empfangsmodul (602) ferner dazu konfiguriert ist, für die Zieloperationstransaktion eine vierte Eingabe zu empfangen; und
das Ausführungsmodul (604) dazu konfiguriert ist, in einem Fall, in dem die Zieloperationstransaktion im aktiven Zustand ist, in Reaktion auf die vom Empfangsmodul empfangene vierte Eingabe eine Operation entsprechend der Zieloperationstransaktion durchzuführen; oder
das Ausführungsmodul (604) ferner dazu konfiguriert ist, in einem Fall, in dem die Zieloperationstransaktion im gesperrten Zustand ist, das Reagieren auf die vom Empfangsmodul empfangene vierte Eingabe zu überspringen.

13. Vorrichtung nach Anspruch 10, wobei das erste Symbol die zweite Schnittstelle ist; und
das Anzeigemodul (601) dazu konfiguriert ist, die erste Schnittstelle und die zweite Schnittstelle der ersten Anwendung anzuzeigen; wobei
ein Anzeigebereich der ersten Schnittstelle einen Anzeigebereich der zweiten Schnittstelle teilweise überlappt und der Anzeigebereich der ersten Schnittstelle größer ist als der Anzeigebereich der zweiten Schnittstelle.

14. Elektronische Vorrichtung (100), umfassend:
einen Prozessor (110); und
einen Speicher (109), der ein Programm oder Anweisungen speichert, die auf dem Prozessor (110) laufen können, wobei das Programm oder die Anweisungen bei Ausführung durch den Prozessor (110) die elektronische Vorrichtung (100) veranlassen, das Schnittstellenanzeigeverfahren nach einem der Ansprüche 1 bis 9 durchzuführen.

15. Lesbares Speichermedium, auf dem ein Programm oder eine Anweisung gespeichert ist, **dadurch gekennzeichnet, dass** das Programm oder die Anweisung bei Ausführung durch einen Prozessor das Schnittstellenanzeigeverfahren nach einem der Ansprüche 1 bis 9 durchführt.

## Revendications

1. Procédé d'affichage d'interface exécuté par un dispositif électronique, **caractérisé en ce qu'**il comprend:
l'affichage d'une première interface d'une première application et d'un premier signe (201), dans lequel le premier signe est utilisé pour indiquer une deuxième interface de la première application, et la première interface et la deuxième interface comprennent chacune une transaction d'opération cible à lecture non répétable;
la réception d'une première entrée par un utilisateur sur le premier signe (202); et
l'affichage de la deuxième interface en réponse à la première entrée (203), dans lequel la transaction d'opération cible comprise dans au moins l'une de la première interface et de la deuxième interface est verrouillée;
dans lequel la transaction d'opération cible incluse dans la première interface et la deuxième interface est une même transaction d'opération.

2. Procédé selon la revendication 1, dans lequel l'affichage d'une première interface d'une première application et d'un premier signe comprend:
la réception d'une deuxième entrée au cas où la deuxième interface de la première application est affichée; et
en réponse à la deuxième entrée, la mise en mémoire tampon des ressources correspondant à la deuxième interface, et l'affichage de la première interface de la première application et du premier signe; et
l'affichage de la deuxième interface en réponse à la première entrée comprend:
en réponse à la première entrée, l'affichage de la deuxième interface sur la base des ressources mises en mémoire tampon correspondant à la deuxième interface.

3. Procédé selon la revendication 1, dans lequel le procédé comprend en outre:
au cas où la deuxième interface est fermée, faire passer la transaction d'opération cible sur la première interface de l'état verrouillé à l'état actif; ou bien
au cas où une troisième entrée sur le premier signe est reçue, l'annulation de l'affichage du premier signe et le passage de la transaction d'opération cible sur la première interface de l'état verrouillé à l'état actif.

4. Procédé selon la revendication 3, dans lequel le procédé comprend en outre: la
réception d'une quatrième entrée pour la transaction d'opération cible; et
au cas où la transaction opérationnelle cible est à l'état actif, effectuer, en réponse à la quatrième entrée, une opération correspondant à la transaction opérationnelle cible; ou bien
au cas où la transaction opérationnelle cible est dans l'état verrouillé, ignorer la réponse à la quatrième entrée.

5. Procédé selon la revendication 1, dans lequel le premier signe est la deuxième interface; et
l'affichage d'une première interface d'une première application et d'un premier signe comprend:
l'affichage de la première interface et de la deuxième interface de la première application, dans lequel une zone d'affichage de la première interface chevauche partiellement une zone d'affichage de la deuxième interface, et la zone d'affichage de la première interface est plus grande que la zone d'affichage de la deuxième interface.

6. Procédé selon la revendication 5, dans lequel, après l'affichage de la première interface et de la deuxième interface de la première application, le procédé comprend en outre:
la réception d'une cinquième entrée par l'utilisateur sur le contenu cible dans la première interface; et
l'addition, en réponse à la cinquième entrée, des ressources correspondant au contenu cible aux ressources correspondant à la deuxième interface; et
l'affichage de la deuxième interface en réponse à la première entrée comprend:
l'affichage de la deuxième interface en réponse à la première entrée, dans lequel la deuxième interface comprend le contenu cible.

7. Procédé selon la revendication 1, dans lequel le premier signe est utilisé pour indiquer au moins une interface cible, ladite au moins une interface cible comprenant la deuxième interface; et
l'affichage de la deuxième interface en réponse à la première entrée comprend:
l'affichage d'une interface de réglage en réponse à la première entrée, l'interface de réglage comprenant une vignette d'interface de chaque interface cible;
la réception d'une sixième entrée par l'utilisateur sur une vignette d'interface de la deuxième interface; et
l'affichage de la deuxième interface en réponse à la sixième entrée.

8. Procédé selon la revendication 7, dans lequel l'interface de réglage comprend une commande cible, et après l'affichage d'une interface de réglage, le procédé comprend en outre:
la réception d'une septième entrée par l'utilisateur sur la commande cible; et
l'addition d'une vignette d'interface à l'interface de configuration en réponse à la septième entrée.

9. Procédé selon la revendication 7, dans lequel, après l'affichage d'une première interface d'une première application et d'un premier signe, le procédé comprend en outre:
la mise à jour du premier signe en un deuxième signe;
la réception d'une huitième entrée par l'utilisateur sur le deuxième signe; et
la fermeture d'une troisième interface en réponse à la huitième entrée; dans lequel
la troisième interface est une interface autre que la première interface dans au moins une interface cible.

10. Appareil d'affichage d'interface (600), appliqué à un dispositif électronique, **caractérisé en ce qu'**il comprend un module d'affichage (601) et un module de réception (602);
le module d'affichage (601) est configuré pour afficher une première interface d'une première application et un premier signe, dans lequel le premier signe est utilisé pour indiquer une deuxième interface de la première application, et la première interface et la deuxième interface comprennent chacune une transaction d'opération cible à lecture non répétable;
le module de réception (602) est configuré pour recevoir une première entrée par un utilisateur sur le premier signe affiché par le module d'affichage; et
le module d'affichage (601) est en outre configuré pour afficher la deuxième interface en réponse à la première entrée reçue par le module de réception, dans lequel la transaction d'opération cible comprise dans au moins l'une de la première interface et de la deuxième interface est dans un état verrouillé;
dans lequel la transaction d'opération cible incluse dans la première interface et la deuxième interface est une même transaction d'opération.

11. Appareil selon la revendication 10, dans lequel
le module de réception (602) est configuré pour recevoir une deuxième entrée au cas où la deuxième interface de la première application est affichée;
le module d'affichage (601) est configuré pour: en réponse à la deuxième entrée reçue par le module de réception, mettre en mémoire tampon les ressources correspondant à la deuxième interface, et afficher la première interface de la première application et le premier signe; et
le module d'affichage (601) est en outre configuré pour : en réponse à la première entrée reçue par le module de réception, afficher la deuxième interface sur la base des ressources mises en mémoire tampon correspondant à la deuxième interface.

12. Appareil selon la revendication 10, dans lequel l'appareil comprend en outre un module de mise à jour (603) et un module d'exécution (604);
le module de mise à jour (603) est configuré pour: au cas où la deuxième interface est fermée, faire passer la transaction d'opération cible sur la première interface de l'état verrouillé à l'état actif; ou bien
au cas où une troisième entrée sur le premier signe est reçue, annuler l'affichage du premier signe et faire passer la transaction d'opération cible sur la première interface de l'état verrouillé à l'état actif;
le module de réception (602) est en outre configuré pour recevoir une quatrième entrée pour la transaction d'opération cible; et
le module d'exécution (604) est configuré pour: au cas où la transaction d'opération cible est à l'état actif, effectuer, en réponse à la quatrième entrée reçue par le module de réception, une opération correspondant à la transaction d'opération cible; ou bien
le module d'exécution (604) est en outre configuré pour: au cas où la transaction d'opération cible est à l'état verrouillé, ignorer la réponse à la quatrième entrée reçue par le module de réception.

13. Appareil selon la revendication 10, dans lequel le premier signe est la deuxième interface; et
le module d'affichage (601) est configuré pour afficher la première interface et la deuxième interface de la première application; dans lequel
une zone d'affichage de la première interface chevauche partiellement une zone d'affichage de la deuxième interface, et la zone d'affichage de la première interface est plus grande que la zone d'affichage de la deuxième interface.

14. Dispositif électronique (100), comprenant:
un processeur (110); et
une mémoire (109) stockant un programme ou des instructions pouvant être exécutés sur le processeur (110), dans lequel le programme ou les instructions, lorsqu'ils sont exécutés par le processeur (110), amènent le dispositif électronique (100) à exécuter le procédé d'affichage d'interface selon l'une quelconque des revendications 1 à 9.

15. Support de stockage lisible stockant un programme ou une instruction, **caractérisé en ce que** le programme ou l'instruction, lorsqu'il est exécuté par un processeur, exécute le procédé d'affichage d'interface selon l'une quelconque des revendications 1 à 9.
